# EUROPEAN PATENT APPLICATION

(11) **EP 2 005 840 A2**
(43) Date of publication of application: **24.12.2008**
(21) Application number: 07739250.4
(22) Date of filing: 22.03.2007
(51) Int. Cl.: A23L 1/10, A23L 2/38, C12G 3/12, A23L 1/305

(54) **PROCESSED BARLEY PRODUCT AND PROCESSING METHOD THEREFOR**

(30) Priority: 22.03.2006 JP 2006079376
(71) Applicant: Sapporo Breweries Limited, Tokyo 150-8522 (JP)
(72) Inventor: KIHARA, Makoto, Shibuya-ku, Tokyo 150-8522 (JP); ITO, Kazutoshi, Shibuya-ku, Tokyo 150-8522 (JP); ROSSNAGEL, Brian G., Saskatchewan S7V1B5 (CA)
(74) Representative: Vossius & Partner
(86) International application number: PCT/JP2007/055807
(87) International publication number: WO 2007/108499

(57) **Abstract**

The object of the present invention is to provide processed barley products which are rich in GABA even after milling of barley seeds, and a processing method therefor. The present invention provides a method for processing barley comprising a step in which barley seeds, whose GABA residue when processed to a pearling degree of 60% is 50% or greater compared to that of the unprocessed seeds, are milled without germination.

## Description

### Technical Field

The present invention relates to a processed barley product and a processing method therefor, and particularly it relates to a processed barley product rich in γ-aminobutyric acid (hereinafter abbreviated as "GABA"), and to a processing method therefor.

### Background Art

Grains constitute a major portion of the human diet and contain nutrients such as vitamins, amino acids, iron, calcium and the like. One such nutrient is GABA, which is known to have antihypertensive, renal function-ameliorating, hepatic function-ameliorating, alcohol metabolism-accelerating and tranquilizing effects, while also being useful from the standpoint of preventing modem lifestyle diseases.

For ingestion of GABA from processed grain products it is common to use germinated seeds of the grain as the raw material. This is because GABA is only present in small amounts in grain seeds, whereas sprouting of the seeds (germination) increases the content of GABA and other useful amino acids (see Patent documents 1 and 2).

Yet because biosynthesis of GABA occurs mainly in the germ portion of grain seeds once the grain has germinated, GABA accumulates in a higher concentration in the outer layer portions of the seeds than the inner portions. This is of no concern if the entire germinated seed is utilized, but since barley seeds are normally used as a product after milling, the GABA content is therefore drastically reduced during the milling step. The pearling of the grains for production of powder or production of rolled barley requires shaving off of the outer layer portions of the seeds to some extent, thereby eliminating the germ portion which contains the highly accumulated GABA and other components (see Non-patent document 1).

[Patent document 1] Japanese Unexamined Patent Publication 2003-159017
[Patent document 2] Japanese Unexamined Patent Publication No. 2003-250512
[Non-patent document 1] Yamazaki et al., Research Report of the Tochigi Prefectural Food Industry Administration Center, No.11, p.5-8 (1997)

### Disclosure of the Invention

### Problems to be Solved by the Invention

As explained above, processed barely products are normally processed by milling of barley seeds. Milling is an indispensable step because the outer layers of barley seeds are responsible for the bitter and acrid flavor, while a white product is also desirable from an aesthetic standpoint.

However, since GABA is abundant in the outer layer portion, the milling process removes the GABA and therefore processed barley products obtained with existing techniques contain virtually no GABA. Consequently, it is not possible to ingest a sufficient amount of GABA with currently available processed barley products.

It is an object of the present invention to provide a processed barley product which is rich in GABA even after milling of barley seeds, and a processing method therefor. Specifically, the object of the invention is to provide a processed barley product with enhanced color and flavor and without a significantly reduced GABA content with respect to unprocessed barley, even after milling which is carried out as an indispensable step in the production of processed barley products, as well as a processing method employed for the product.

### Means for Solving the Problems

As a result of much diligent research directed toward solving the problem described above, the present inventors have discovered the existence of barley seeds which are rich in GABA even without germination, and which contain GABA not only in the outer layer portions of the seeds but also in the inner layer portions, and the present invention has been completed on the basis of said discovery.

Specifically, the present invention provides a method for processing barley comprising a step in which barley seeds, whose GABA residue when processed to a pearling degree of 60% is 50% or greater compared to that of the unprocessed seeds, are milled without germination. Currently, when barley seeds used as a raw material for processed barley products are milled to a pearling degree of 60%, the GABA residue is less than 50% of that of unprocessed seeds, but using a barley variety such as CDC Fibar will result in a high concentration of GABA residue in the processed seeds, thus allowing efficient ingestion of GABA from processed barley products.

The present invention further provides the aforementioned method for processing barley which further comprises a step of pulverizing the milled barley seeds. Even the pulverized powdered processed barley products have high residual GABA concentrations and thus allow efficient ingestion of GABA from the pulverized processed barley products.

According to the method for processing barley described above, the barley seeds are preferably seeds of the barley variety CDC Fibar. Seeds of the barley variety CDC Fibar contain abundant amounts of GABA as well as other functional components such as β-glucans in the inner layer portions as well as near the outer layer portions of the seeds, and therefore such functional components including GABA can be efficiently ingested from the processed barley products of these seeds.

The present invention further provides a processed barley product obtained by the aforementioned method for processing barley. A processed barley product obtained by the processing method has a high residual GABA concentration in the processed seeds, so that GABA can be efficiently ingested from foods and beverages produced using the processed barley product as a raw material.

The invention further provides beverages containing the aforementioned processed barley product. Beverages produced using the processed barley product as a raw material also allow efficient ingestion of GABA.

### Effect of the Invention

With the processed barley product and processing method of the invention, it is possible to provide a processed barley product rich in GABA by using ungerminated barley seeds as the raw material, and to provide a processing method therefor.

### Brief Description of the Drawings

Fig. 1 is a graph showing the free amino acid distribution for the outer and inner layer portions of ungerminated Ichibanboshi seeds
Fig. 2 is a graph showing the free amino acid distribution for the outer and inner layer portions of ungerminated CDC Fibar seeds.
Fig. 3 is a graph showing the free amino acid distribution for the outer and inner layer portions of germinated Ichibanboshi seeds.
Fig. 4 is a graph showing the free amino acid distribution for the outer and inner layer portions of germinated CDC Fibar seeds.
Fig. 5 is a graph showing the β-glucan content distribution of Ichibanboshi seeds.
Fig. 6 is a graph showing the β-glucan content distribution of CDC Fibar seeds.
Fig. 7 is a graph comparing GABA contents of barley varieties under different pearling conditions.
Fig. 8 is a graph comparing reductions in GABA contents of barley varieties under different pearling conditions.

### Best Mode for Carrying Out the Invention

Preferred embodiments of the processed barley product and processing method of the invention will now be described in detail.

The method for processing barley according to the invention is characterized by comprising a step in which barley seeds, whose GABA residue when processed to a pearling degree of 60% is 50% or greater compared to that of unprocessed seeds, are milled without germination. The pearling degree is the extent of milling expressed in numerical terms (%), and specifically it is the value of the "weight of the processed barley seeds obtained by removal of the outer layer portion from the barley raw material" divided by the "weight of the barley seed raw material", multiplied by 100. Thus, a "pearling degree of 60%" means that the surrounding portion removed as bran constitutes 40% and the center portion of the polished barley seed constitutes 60%. "Milling" refers to the operation of removing the bran layer as the outer layer of the barley seeds. "Unprocessed seeds" are barley seeds which have undergone absolutely no processing such as milling or germination, and which retain the bran layer as the outer layer of the barley seeds.

The barley seeds used for the invention may be selected upon determining the GABA content of the outer layer portion removed as bran and the inner layer portion used as the processed barley seeds, after milling to a pearling degree of 60%, based on whether the GABA residue of the processed barley seeds is 50% or greater compared to the unprocessed seeds. Processing of such selected barley seeds by milling can yield a processed barley product containing a high concentration of GABA compared to conventional products.

A particularly preferred barley variety among such barley varieties is CDC Fibar. CDC Fibar, whose barley seed inner layer portion is rich not only in GABA but also in β-glucans which are known to have a cholesterol-lowering effect, is useful as a processed barley product. The barley variety used may be a single variety, or a mixture of two or more varieties.

The barley seeds used for processing preferably have the grit and dirt removed using, for example, a sorter prior to milling; however, no GABA-enriching treatment, such as germination, is necessary. For ordinary processed grain products it is common to increase the GABA content by germination of the seeds, but in the method for processing barley according to the invention it is possible to obtain an increased GABA content in the processed product without germination.

The milling need not be carried out with a barley mill, as a rice mill may be used if it is suitable for barley by setting the pearling degree. The milling need only remove the components responsible for the bitter and acrid flavor, and yield a whiter product from an aesthetic standpoint.

The method for processing barley according to the invention is also characterized by comprising the aforementioned step of milling barley seeds and a further step of pulverizing the milled barley seeds. Pulverization of milled barley seeds need not be carried out with a barley grinder, and any common grain grinder may be used if it is suitable for barley. Processed barley products are also distributed as powders, and since this further step does not affect the GABA content it is possible to produce processed barley products containing higher concentrations of GABA than according to the prior art.

A processed barley product of the invention is characterized by being obtained by the method for processing barley described above. A "processed barley product" means processed barley seeds or powder having the bran portion removed by milling. Such processed barley products will contain high concentrations of GABA compared to other products and are useful as food materials.

A beverage according to the invention is characterized by containing a processed barley product as described above. A "beverage containing a processed barley product" refers to tea, a soft drink or an alcoholic beverage and includes, for example, barley tea, Japanese spirits, barley extract and the like. Such beverages will contain high concentrations of GABA compared to other products and are useful as health beverages.

### Examples

The present invention will now be explained in further detail through the following examples, with the understanding that the invention is in no way limited by these examples.

### (Example 1)

The following test was conducted in order to determine the free amino acid distribution of the outer layer portion (bran portion) and inner layer portion (endosperm) of ungerminated barley varieties Ichibanboshi and CDC Fibar.

First, 50 g of each type of seed, prior to germination, was subjected to milling (pearl barley polishing) for 3 minutes using a rice mill (QS-3, product of Toshiba Corp.) to separate the outer layer and inner layer portions.

The yield for the total seeds of Ichibanboshi was 5.7% outer layer portion and 94.3% inner layer portion. For total seeds of CDC Fibar, the yield was 7.6% outer layer portion and 92.4% inner layer portion. A prescribed amount of water was added to the outer and inner layer portions of each variety, the mixture was shaken for 14-15 hours at a low temperature (5°C) for extraction of the amino acids, and the supernatant from subsequent centrifugation was treated with a 3% sulfosalicylic acid solution, after which the content of each amino acid was quantitated with an amino acid analyzer (JCL-500 by Jeol Corp.).

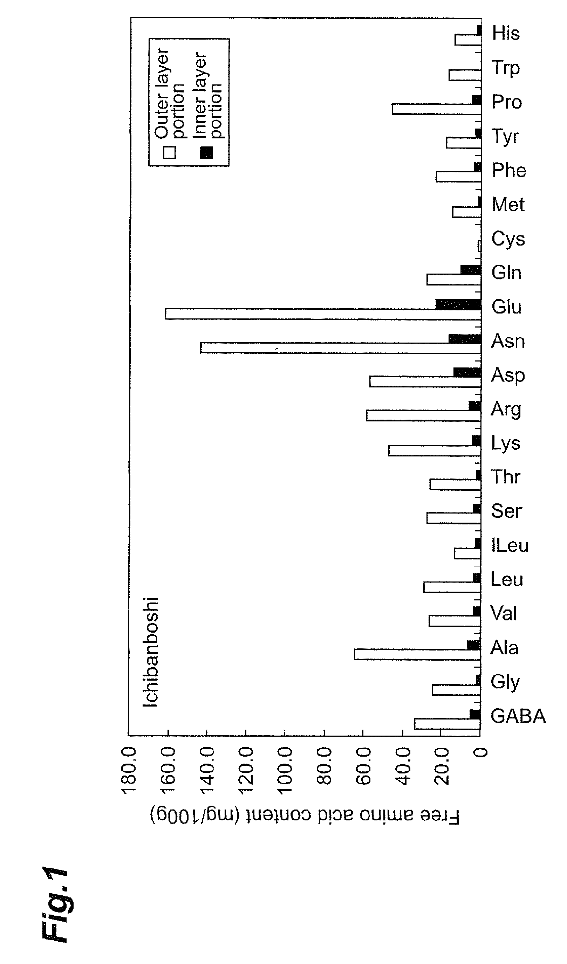

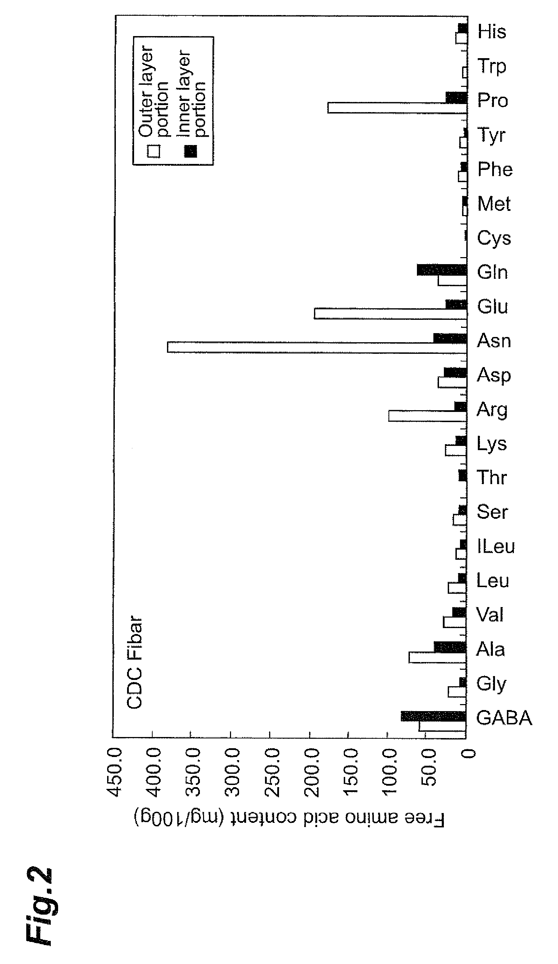

Fig. 1 is a graph showing the free amino acid distribution for the outer and inner layer portions of ungerminated Ichibanboshi seeds, and Fig. 2 is a graph showing the free amino acid distribution for the outer and inner layer portions of ungerminated CDC Fibar seeds.

As seen in Fig. 1, a greater percentage of the total free amino acids of Ichibanboshi tended to be found in the outer layer portion than in the inner layer portion. In CDC Fiber, on the other hand, GABA, glutamine, threonine (Thr) and cysteine (Cys) were found in a greater percentage in the inner layer portion than in the outer layer portion, in contrast to Ichibanboshi (Fig. 2).

### (Example 2)

The following experiment was conducted to determine how the free amino acid distribution in the outer and inner layer portions of seeds of the barley varieties Ichibanboshi and CDC Fibar is affected by germination.

First, 250 g of seeds of the barley variety Ichibanboshi or CDC Fibar was germinated in a dark area at 15°C by repeating imbibing and draining to a seed moisture content of 43.5%, and this was followed by drying in a roast drying step for 29 hours. Next, 50 g of the germinated seeds of each variety was subjected to milling (pearl barley polishing) for 3 minutes using a rice mill (QS-3, product of Toshiba Corp.) to separate the outer layer and inner layer portions.

The yield for the total seeds of Ichibanboshi was 9.2% outer layer portion and 90.8% inner layer portion. For total seeds of CDC Fibar, the yield was 7.0% outer layer portion and 93.0% inner layer portion. A prescribed amount of water was added to the outer and inner layer portions of each variety, the mixture was shaken for 14-15 hours at a low temperature (5°C) for extraction of the amino acids, and the supernatant from subsequent centrifugation was treated with a 3% sulfosalicylic acid solution, after which the content of each amino acid was quantitated with an amino acid analyzer (JCL-500 by Jeol Corp.)

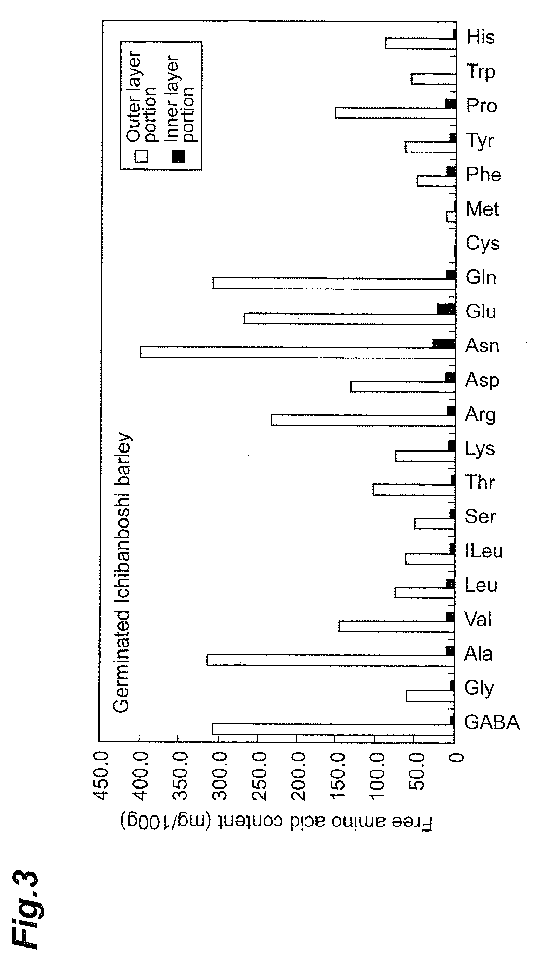

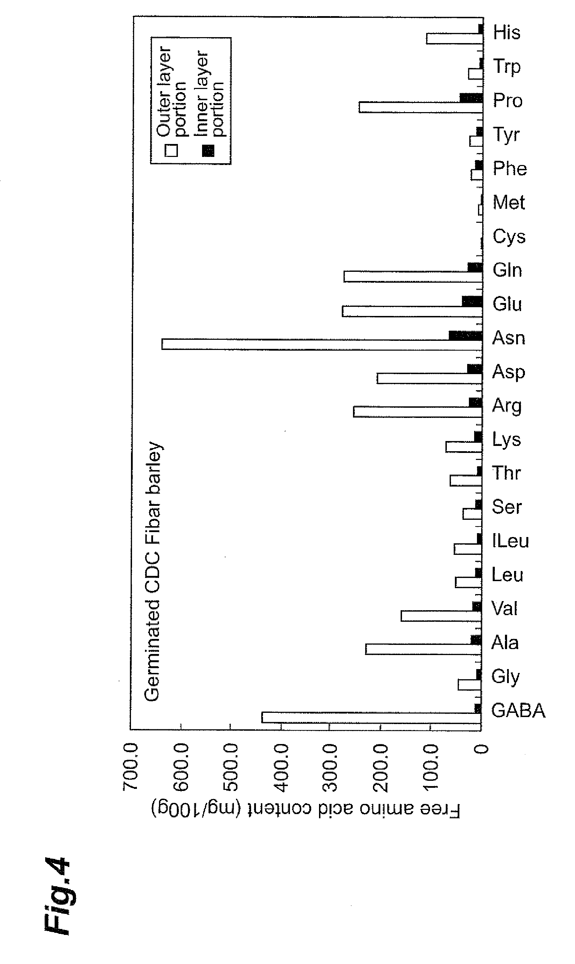

Fig. 3 is a graph showing the free amino acid distribution for the outer and inner layer portions of germinated Ichibanboshi seeds, and Fig. 4 is a graph showing the free amino acid distribution for the outer and inner layer portions of germinated CDC Fibar seeds.

As seen in Figs. 3 and 4, the total free amino acids tended to be found in a greater percentage in the outer layer portion than the inner layer portion in both of the varieties.

Also, germination increased the free amino acid content of the outer layer portion in both of the varieties, while tending to reduce the content in the inner layer portion. This demonstrated that milling of ordinary processed barley products decreases, rather than increases, the content of free amino acids including GABA even after germination.

### (Example 3)

The following experiment was conducted to determine the β-glucan contents in the outer and inner layer portions of seeds of ungerminated barley varieties Ichibanboshi and CDC Fibar.

The outer and inner layer portions of barley seeds obtained by milling in Example 1 were subjected to pulverization, and after adding water, the mixture was stirred in a boiling water bath for extraction of the β-glucans; this was followed by centrifugation and subsequent quantitation of the β-glucan content by the FIA (fluorescent indicator absorption) method.

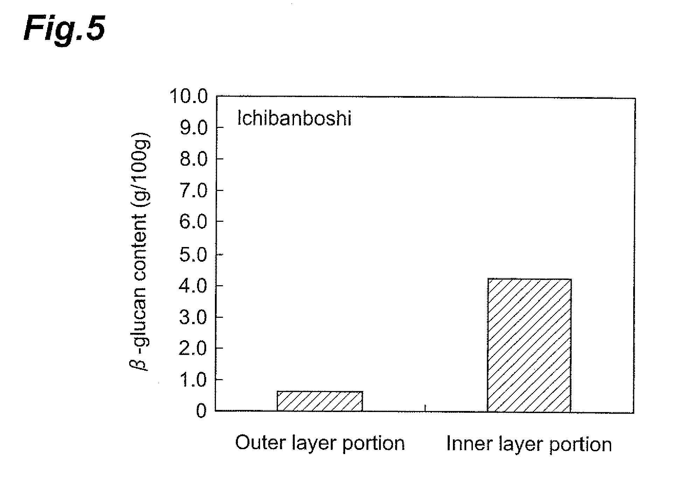

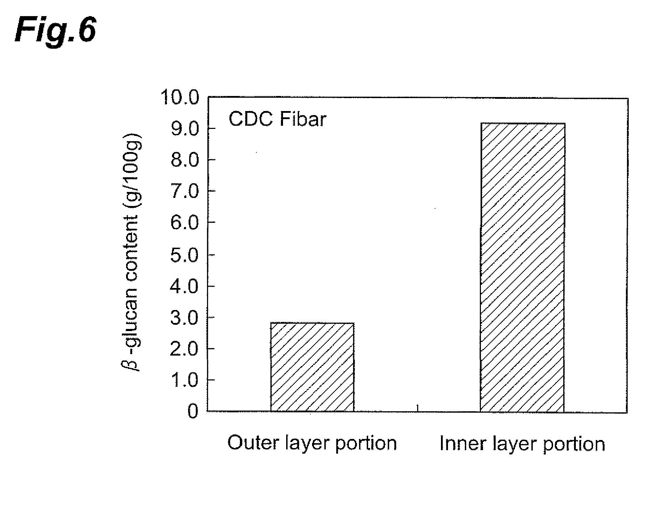

Fig. 5 is a graph showing the β-glucan content distribution of Ichibanboshi seeds, and Fig. 6 is a graph showing the β-glucan content distribution of CDC Fibar seeds.

As seen in Figs. 5 and 6, β-glucan was clearly found in a greater percentage in the inner layer portion than in the outer layer portion in both of the varieties. The β-glucan content in both the outer and inner layer portions of CDC Fibar was significantly higher than Ichibanboshi.

### (Example 4)

The following experiment was conducted in order to determine the GABA contents with a 60% pearling degree and the GABA reduction with respect to unprocessed seeds, for seeds of ungerminated barley varieties Agurimochi, CDC Alamo and CDC Fibar.

First, each of the ungerminated seed varieties was milled with a rice mill (TM05C Test Mill, product of Satake Corp.), and the inner layer portions were collected. The milling was carried out by two methods, pearl barley polishing and split barley polishing, and the effect of each milling method on the GABA content was examined. Pearl barley polishing is milling in a single step of shaving of the seeds, while split barley polishing is milling in three steps, a step of shaving of the seeds, a step of splitting of the seeds and another step of shaving of the seeds.

The hulled barley variety Agurimochi had a pearling degree of 55%, while the naked barley varieties CDC Alamo and CDC Fibar each had a pearling degree of 60%. A prescribed amount of water was added to the inner layer portion of each variety and to unprocessed seeds which had not been milled, the mixture was shaken for 14-15 hours at a low temperature (5°C) for extraction of the amino acids, and the supernatant from subsequent centrifugation was treated with a 3% sulfosalicylic acid solution, after which the content of each amino acid was quantitated with an amino acid analyzer (JCL-500 by Jeol Corp.).

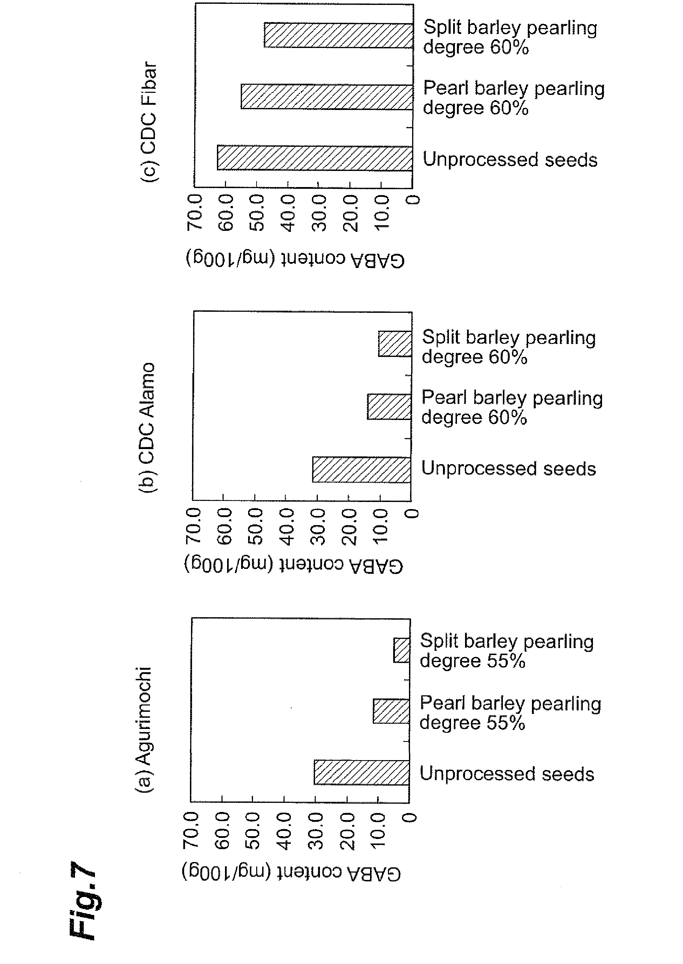

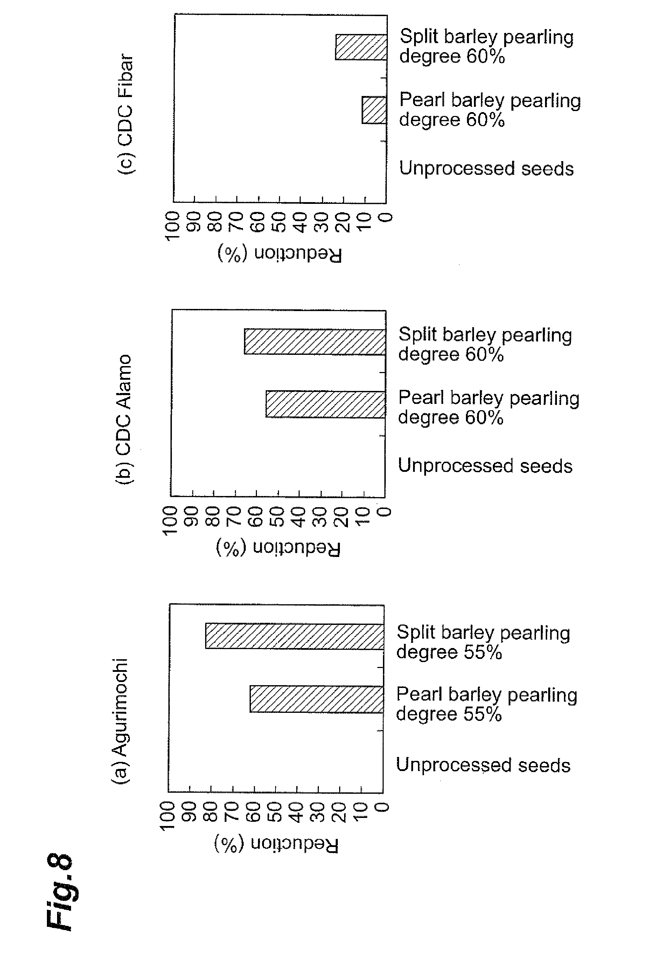

Fig. 7 is a graph comparing GABA contents of barley varieties under different pearling conditions, and Fig. 8 is a graph comparing reductions in GABA contents of barley varieties under different pearling conditions.

For the Aguramochi variety, pearl barley polishing and split barley polishing to a pearling degree of 55% resulted in GABA contents of approximately 38% and 17%, respectively (GABA content reductions of approximately 62% and 83%, respectively) compared to the unprocessed seeds. For the CDC Alamo variety, pearl barley polishing and split barley polishing to a pearling degree of 60% resulted in GABA contents of approximately 44% and 34%, respectively (GABA content reductions of approximately 56% and 66%, respectively) compared to the unprocessed seeds. However, for the CDC Fibar variety, even pearl barley polishing and split barley polishing to a pearling degree of 60% resulted in GABA contents of approximately 88% and 76%, respectively (GABA content reductions of approximately 12% and 24%, respectively) compared to the unprocessed seeds, thus demonstrating a rich GABA content even after milling.

### Industrial Applicability

With the processed barley product and processing method of the invention, it is possible to provide a processed barley product rich in GABA by using ungerminated barley seeds as the raw material, and to provide a processing method therefor.

## Claims

1. A method for processing barley, comprising a step in which barley seeds, whose γ-aminobutyric acid residue when processed to a pearling degree of 60% is 50% or greater compared to that of the unprocessed seeds, are milled without germination.

2. A method for processing barley according to claim 1, which further comprises a step of pulverizing the milled barley seeds.

3. A processed barley product obtained by a method for processing barley according to claim 1 or 2.

4. A beverage containing a processed barley product according to claim 3.
